# EUROPEAN PATENT SPECIFICATION

(11) **EP 4 146 599 B1**
(45) Date of publication and mention of the grant of the patent: **16.10.2024**
(21) Application number: 21730800.6
(22) Date of filing: 06.05.2021
(51) Int. Cl.: C02F 1/00, C02F 1/28, C02F 1/50, B01D 24/12, B01D 24/42, B01D 35/027, B01D 35/153

(54) **FILTRATION DEVICE FOR LIQUIDS**
FILTRIERUNGSVORRICHTUNG FÜR FLÜSSIGKEITEN
DISPOSITIF DE FILTRATION DE LIQUIDES

(30) Priority: 08.05.2020 EP 20173754
(43) Date of publication of application: 15.03.2023
(73) Proprietor: BRITA SE, 65232 Taunusstein (DE)
(72) Inventor: BUNNEMANN, Phillip, 65599 Dornburg (DE)
(86) International application number: PCT/EP2021/000062
(87) International publication number: WO 2021/223904

(56) References cited:
- US-A- 5 122 272
- US-A- 5 795 471
- US-A1- 2005 252 844
- US-A1- 2013 048 578
- US-B1- 6 733 669

## Description

### Technical Field

The invention relates to a filtration device according to the pre-amble of claim 1.

### Background of the invention

For many applications there is a need for a filtration device that enables the filtering of liquids. Even though the filtration device disclosed below is suitable for many different applications, the invention is described using the example of a water filter without limiting the invention to a water filtration device.

Usually, such filtration devices comprise a container body with a storage area for collecting and holding the liquid, e.g. water, until there is a need for extracting a quantity of the liquid from the filtration device. The container body comprises an inlet which allows for filling the liquid into the storage area within the container body. The inlet can be closed liquid-tight with a lid in order to prevent any unwanted contamination of the liquid inside the storage area from the outside. The container body further comprises an outlet which allows for removal of the liquid after the filtration process.

A suitable filter element is arranged in the flow path between the inlet and the outlet of the container body. For some filtration devices the filter element is located inside of the storage area and connected to the inlet or outlet of the filtration device. Some other filtration devices comprise a filter element that is located outside of the storage area and connected with the storage area by means of a conduit. The filter element may be arranged between the inlet and the storage device or between the storage device and the outlet.

Many different filter elements are known in prior art, comprising different types of filter media usually disposed in the flow path through the filter element. The filter media may comprise activated carbon, zinc or copper, or similar materials that improve e.g. the quality of drinking water. The filter element may also comprise membranes or porous materials that remove particles with a particles size that is larger than the pore size of the membrane or porous material that is arranged within the flow path.

For some filtration devices, the container body is a bottle with an opening that is used for filling water into the bottle as well as for extracting filtered water from the bottle. The opening is usually closed with a cap, whereby a filtering element is mounted at the cap and covers a spout in the cap, through which the filtered water can be extracted from the bottle. Such bottles can easily be carried by a user and used when needed. Sometimes, the cap comprises a spout or an outlet at which a user can suck filtered water from the bottle.

In order to facilitate the extraction of filtered water from the bottle, some bottles comprise an air pump that in many cases is also mounted to the cap. By manually or automatically operating the air pump a pressure increase inside of the bottle can be generated, resulting in a flow of a corresponding amount of water from the inside of the bottle through the filter element and through the spout or outlet towards outside of the bottle. Such filtration devices are disclosed e.g. in US 2013/0048578 A1 or in US 2019/0194032 A1. However, a cap that contains the inlet and outlet, and that contains or supports the filter element and the air pump is expensive to manufacture and difficult to clean.

Some other filtration devices comprise a container body that is intended for stationary use. The volume of the storage area inside such a container body may be adapted for personal or household use and allow for holding e.g. one or several liters. Such a filtration device is disclosed e.g. in WO 2010/091467 A1. A filter element is located at an outlet of a cube-shaped vessel. By applying pressure within the vessel, the liquid stored inside the vessel will be caused to flow through the filter element and pass out of the vessel via the outlet. The outlet may be located on top of the vessel, and the filter element can be mounted at the outlet. It is also possible to located the outlet of the vessel at the bottom, and to provide for an external conduit, namely a riser pipe, that extends upwards and leads to an outlet of the conduit above the top of the vessel. The filter element can be a part of this conduit or can be inserted into this conduit, allowing for positioning the filter element outside of the vessel. However, repeated cleaning of the vessel after intervals of use is laborious, as not all areas of the vessel are easily accessible.

A filtration device with a cylindrical-shaped or oval-shaped storage area that is easily accessible via a large opening at the top of the container body is disclosed in WO 2016/100880 A1. For some of the disclosed embodiments, a conduit is an integral part of the filter element and is used or exchanged together with the filter element. It is also described to make use of a conduit that is designed like a riser pipe and attached to the container body. The riser pipe leads from an opening at the bottom of the container body towards a spout located above the fill line of the storage area inside the container body. As with the filtration device discussed above, handling and cleaning of such a filtration device is laborious.

Thus, there is a need for a filtration device which facilitates handling and cleaning. The objective of the present invention was to provide for a filtration device, which can be easily cleaned without need for manually cleaning angled areas or areas that are difficult to access.

US 6,733,669 B1 discloses a personal water purification system providing a watertight polymeric container having a removable, threaded inlet fill cap that provides access to an unfiltered upper water receiving chamber. At the lowest integral portion of the receiving chamber, a threaded port is provided for the attachment of a disposable filter cartridge that is vertically threaded into the port. This allows for gravity-induced filtering as opposed to pressure-induced filtering. A plurality of filtered water ports are also located in the lower integral portion of the unfiltered water chamber, one or more opposite the other and/or juxtaposed, which allow filtered water to be dispensed through a plurality of channels/conducts from a lower filtered water chamber to a drinking spout provided at a topmost portion of the container, and to flow by gravity when the container is tipped to its side.

US 2013/0048578 A1 discloses a pressurised water bottle that includes a pressurising tube that delivers air into the bottle to pressurise. Unfiltered water placed in the bottle from a removable top is delivered through a tube that pushes the pressurised water through the bottle and through a filter and out through a spout and to the user to ultimately ingest.

US 2005/0252844 A1 discloses a water treatment unit positioned adjacent a bottom of a sports water bottle. An elongate opening at a top of the water treatment unit is connected to an opening in a cap of the bottle by an elongate conduit such as a straw. The bottle is preferably formed of a flexible material, such as plastic, so that when the bottle is squeezed water will be forced from an interior of the bottle surrounding the unit through an inlet, the water treatment unit, the straw and the opening.

### Summary of the invention

The present invention relates to a filtration device as defined in claim 1. As all liquid-contacting parts except of the filter element, namely the storage area, the riser pipe and the outlet are manufactured as a one-piece container body, there is no need to dismantle these parts before cleaning. Furthermore, there are no joints where impurities or deposits from the liquid can accumulate and stick, which then have to be cleaned with considerable effort. The design and shape of the one-piece container body may be adapted to allow for easy access of all areas inside of the one-piece container body which further facilitates the cleaning of all parts of the filtration device that will be in contact with the liquid during the intended use of the filtration device. According to an advantageous aspect of the invention, the inlet of the container body is arranged above the filling level of the storage area and has a cross-sectional area which corresponds to the cross-sectional area of the storage area, so that the storage area is accessible without undercuts via the inlet. A large opening of the container body provides for easy access of the inside of the container body.

In accordance with an embodiment of the invention, the seating for the filter element is only accessible from the storage area. The seating for the filter element may be located at the bottom of the storage area. The seating is preferably designed and arranged in a manner as to allow for an easy mounting of the filter element in a position that fully covers the output opening of the storage area. Thus, the flow path of liquid that is extracted from the storage area must traverse the filter element before entering the extraction conduit with the riser pipe. The cross-section of the storage area is preferably large enough to allow for a person to mount or dismount the filter element inside the storage area by hand and without the need for tools.

In yet an alternative embodiment that is also considered advantageous, the seating for the filter element is accessible from outside of the container body via a filter opening in the container body, whereby the filter opening is sealed liquid-tight with a removable filter opening lid, allowing the mounting or removal of the filter element through the filter opening. The filter opening is preferably located close by the seating, allowing easy access to the seating from the outside of the container body, which facilitates the mounting and dismounting of the filter element in the seating. The filter opening can also be arranged close to the output opening of the storage area and thus close to the input end of the riser pipe, which facilitates access to this end of the riser pipe for cleaning purposes.

The filter element may have a screw thread so that the filter element can be screwed into the seating. It is also possible to engage the filter element with the seating using a bayonet lock or a snap-in connection. In its position inserted into the seating, the filter element can be sealed against the seating with an additional sealing element.

In order to reduce the handling effort required to replace a used-up filter element, it is optionally possible that the filter element is mounted to the filter opening lid. The filter opening lid may also be an integral part of a one-piece housing of the filter media of the filter element. The seating of the filter element can be used simultaneously as seating for the filter opening lid. An exchange and replacement of the filter element only requires the dismounting of the filter opening lid from outside of the container body, the removal of the filter element together with the filter opening lid, and subsequent remounting a new filter element until the filter opening lid closes the filter opening in a liquid-tight manner. The design of the seating may be adapted for e.g. a bayonet lock or a screw cap. The combined filter element and filter opening lid may comprise sealing components like e.g. sealing rings which simultaneously serve to seal the filter opening of the container body as well as the filter element against the seating and thus the flow path of the liquid through the filter element.

In accordance with a particularly advantageous embodiment of the invention, the output end of the riser pipe is connected via a duct to the laterally spaced outlet, whereby the duct is a gutter that is open at the top. Thus, the riser pipe as well as the duct and the laterally spaced outlet are open at the top, allowing for easy access to all volumes and areas inside of the one-piece container body. If the container body is placed upside down on the top of the container body, any liquid that is previously inside the container body will completely flow out of the container body. Thus, if the container body is cleaned by using a cleaning liquid like, e.g. water with cleaning agents followed by clean water, after placing the container body upside down all remaining water will flow out of the container body and there is no need for manually drying or wiping out the inside of the container body.

The top side of the open duct can optionally be covered by a duct cover that can be fixed on the duct and retained in that position by frictional force or positive locking of the duct cover. The duct cover prevents any unwanted contamination by particles or dust of the riser pipe that runs into the duct. The duct cover can be made of some elastomeric synthetic material that allows the clipping on of the duct cover on top of the duct. Alternatively, the duct cover can be made e.g. of a rigid plastic material or of stainless steel, which allows for a snap-in connection on top of the open duct. It is also possible to combine the duct cover with a lid that covers the inlet of the container body that is next to the duct. By making the duct cover an integral part of a one-piece top lid that covers simultaneously the inlet of the storage area of the container body as well as the open duct, the number of different parts that must be disassembled for cleaning the filter device and that must be reassembled after a cleaning process can be reduced. The duct cover that is removably attachable to the top of the duct combines protection of the filtered liquid against contamination and unwanted exposure to dust etc. with considerable facilitation of cleaning the duct.

According to another aspect of the invention the outlet comprises a downward pointing spout. A downward pointing spout facilitates the targeted removal of the filtered liquid. In addition, an aerator or a swiveling nozzle, for example, can be attached to the downward-facing spout to make it as convenient as possible to remove the filtered liquid. It is also possible that a further mechanical filter, for example a filter membrane, can be detachably attached to the downward pointing spout.

In order to further facilitate the cleaning of the filtration device, the container body may optionally be made of a dishwasher suitable material, preferably a dishwasher safe material. Thus, the container body can be put into a dishwasher for cleaning the container body. By placing the container body upside down without any lids and duct cover inside a dishwasher, the dishwasher can perform a full cleaning of the container body, usually without need for any additional manual cleaning or further manual processing as e.g. drying or wiping of regions inside of the container body that are difficult to access. Furthermore, the one-piece container body does not require any disassembling of parts before putting the container body inside a dishwasher. In addition, no interstices or joints are required for the container body that might allow for unwanted accumulation and retention of contamination, which might require additional manual handling and cleaning procedures.

According to an advantageous aspect of the invention the filtration device comprises a base part to accommodate the container body, whereby the pressure generating device is arranged inside of the base part and pressure-transmitting connected to the storage area if the container body is accommodated on the base part. The pressure generating device might comprise an electrically operated air pump with a connecting air tube that leads into the storage area inside the container body. The air pump, the required electrical parts and the energy supply can be arranged inside the base part. The electrical energy can be provided by batteries or via an electrically conductive connection to the household energy supply. It is also possible to provide for a manually operated air pump that can be arranged within the base part. In yet another embodiment, it is also possible to arrange the air pump inside a lid that covers the storage area of the container body. Thus, there is no need for a connecting air tube that connects the air pump with the storage area inside the container body.

In case that the filtration device comprises such a connecting air tube, it may be advantageous that the pressure generating device is separated by a check valve from the storage area inside the container body. The check valve can be arranged either inside the container body or as part of the base part or of the connecting air tube. The check valve may have a valve ball which is lifted from the valve seat by the overpressure generated by the air pump and releases the air tube as long as the overpressure is maintained.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a cross-sectional view of a first embodiment of a filtration device with a one-piece container body and a filter element that is accessible from inside the container body,
Figure 2 illustrates a cross-sectional view of a lower part of another embodiment of the filtration device with the filter element that is accessible from outside the container body, and
Figure 3 illustrates an exploded perspective view of yet another embodiment of the filtration device with the container body accommodated on top of a base part.

### Detailed description of the invention

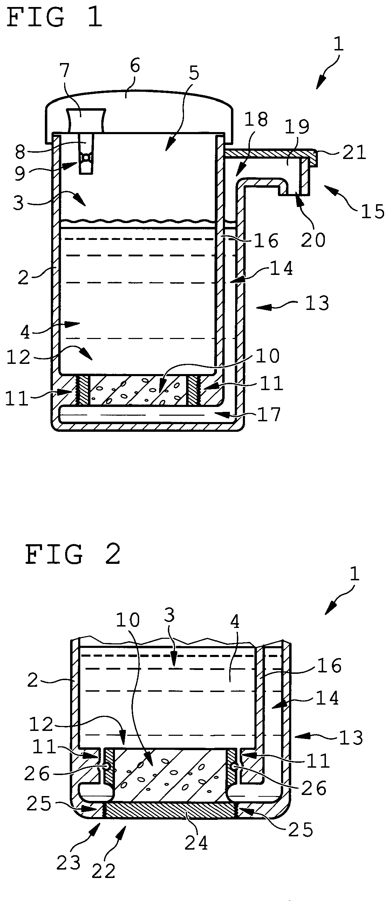

By way of example, figure 1 illustrates a filtration device 1 according to an embodiment of invention. The filtration device 1 comprises a container body 2 with a storage area 3 for holding a liquid 4 to be filtered by the filtration device 1. The container body 2 comprises an inlet 5 for filling the liquid into the storage area 3 within the container body 2. The inlet 5 is a large opening on top of the container body 2, whereby the inlet 5 has a cross-sectional area that corresponds to the cross-sectional area of the storage area 3. Thus, the storage area 3 is accessible from the top side of the container body 2 via the inlet 5 without any undercuts or edges, which facilitates access to the storage area 3 inside the container body 2.

A lid 6 can be removably attached over the inlet 5 to the container body 2. The lid 6 can be mounted pressure-tight onto the container body 2. The lid 6 may comprise a pressure generating device 7 that is only hinted at in figure 1. The pressure generating device 7 can be operated manually or automatically, e.g. by an electric pump. By operating the pressure generating device 7, air is pumped into the storage area 3 via an air tube 8 with a check valve 9.

A filter element 10 is located in a seating 11 with a thread at a bottom 12 of the storage area 3 inside the container body 2. The filter element 10 could also be mounted into the seating 11 by a bayonet lock or by a snap-in connection. An extraction conduit 13 connects the storage area 3 via the filter element 10 through a riser pipe 14 with an outlet 15 for discharging the liquid 4 from the storage area 3 inside the container body 2. The riser pipe 14 is arranged along an outside wall 16 of the storage area 3 of the container body 2. The riser pipe 14 extends from the bottom 12 of the storage area 3 to the outlet 15 close to the top of the container body 2 next to the inlet 5 with the lid 6. An input end 17 of the riser pipe 14 is next to the filter element 10. An output end 18 of the riser pipe 14 is connected via a horizontal duct 19 with the outlet 15 with a downward pointing spout 20.

The duct 19 is designed as a gutter that is open at the top. The gutter leads to the outlet 15 that is also open at the top. A duct cover 21 can be mounted on top of the duct 19 in order to protect the open gutter from any unwanted contamination e.g. by particles or dust that may fall into the gutter. The duct cover 21 is made of an elastomeric synthetic material that allows for releasably mounting the duct cover 21 onto the duct 19 by clipping on, plugging on or pushing the duct cover 21 onto the duct 19. It is also possible to make use of a duct cover 21 that is made of a rigid plastic material or of a suitable metal, e.g. a sheet material or stainless steel.

The storage area 3, the seating 11 for the filter element 10, the extraction conduit 13 comprising the riser pipe 14 and the outlet 15 are integral parts of the one-piece container body 2. Thus, with the exception of the replaceable filter element 10, all components that are in contact with the liquid 4 are manufactured one-piece and without the need for any joints or gaps between individual parts, which must be manufactured separately and then assembled to form the filtration device 1.

After removal of the lid 6, the storage area 3 of the container body 2 can be filled with the liquid 4 to be filtered by the filtration device 1. After filling the storage area 3 with the liquid 4, the lid 6 can be mounted pressure-tight on top of the container body 2. Afterwards, if the pressure generating device 7 is operated, either manually or by means of an electric pump, the pressure inside the storage area 3 rises and a corresponding portion of the liquid 4 is forced through the filter element 10 that is arranged at the bottom 12 of the storage area 3, resulting in performing a filtration process and providing a portion of filtered liquid 4 that is discharged through the extraction conduit and the outlet 15 from the container body 2. By operating the pressure generating device 7, the filtered liquid 4 rises through the riser pipe 14 and then flows through the horizontally running duct 19 and out of the downward directed outlet spout 20 of the outlet 15.

In order to perform a cleaning of the filtration device 1, the lid 6 can be removed from the container body 2 and the duct cover 21 can be removed from the duct 19. Afterwards, the filter element 10 is easily accessible from the inlet 5 and can be manually removed from the seating 11 by performing a rotational movement of the filter element 10, causing the filter element 10 to rotate out of the seating 11. After removing the filter element 10 from the bottom 12 of the storage area 3, the remaining one-piece container body 2 can be easily cleaned e.g. by placing the container body 2 upside down into a dishwasher. All areas inside of the container body 2, including the riser pipe 14 and the duct 19, are easily accessible from the top side of the container body 2.

Figure 2 illustrates another embodiment of the container body 2, whereby only a lower region of the container body 2 is shown. The filter element 10 is mounted into a seating 11 that is accessible via a filter opening 22 at a bottom 23 of the container body 2. Before filling the liquid 4 into the storage area 3, the filter opening 22 can be closed liquid-tight with a filter opening lid 24 that can be screwed into a thread 25 on the edge of the filter opening 22. The filter element 10 is attached on top of the filter opening lid 24. By mounting the filter opening lid 24 into the filter opening 22, the filter element 10 is located within the seating 11 for the filter element 10 at the bottom 12 of the storage area 3. A gap between the filter element 10 and the seating 11 is sealed liquid-tight by an O-ring gasket 26, which is arranged in a circumferential groove around the circular-shaped filter element 10. Instead of arranging a O-ring gasket 26 within the gap, it is also possible to make use of other suitable sealing elements like e.g. an elastomeric sealing lip. A flow-through filter medium 27 or, in case of a combined filter element 10, several filter media 27 are arranged between the storage area 3 and the extraction conduit 13, forcing any liquid that is discharged from the storage area 3 through the extraction conduit 13 towards the outlet 15 to flow through the filter medium 27.

Thus, the filter element 10 is easily accessible from outside of the container body 2. A spent filter element 10 can be replaced by removing the filter opening lid 24 from the bottom 23 of the container body 2 and by inserting a new filter element 10 together with a corresponding filter opening lid 24 into the filter opening 22 at the bottom 23 of the container body 2.

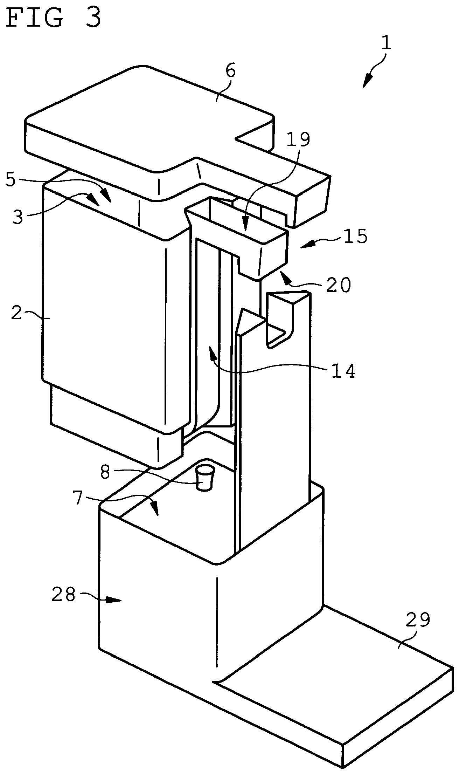

Figure 3 illustrates another embodiment of the filtration device 1 with the container body 2 that is accommodated onto a base part 28. The base part 28 comprises the pressure generating device 7 that is connected via the connecting air tube 8 that leads into the storage area 3 of the container body 2. The lid 6 covers the inlet 5 of the storage area 3 of the container body 2 as well as the duct 19 that connects the output end 18 of the riser pipe 14 with the spout 20 that is directed downward towards a platform 29 at a bottom of the base part 28 for placing a glass or a bottle to be filled with the filtered liquid.

## Claims

1. A filtration device (1) for liquids, comprising a container body (2) with a storage area (3) for holding the liquid (4) to be filtered by the filtration device (1), whereby the container body (2) comprises an inlet (5) for filling the liquid (4) into the storage area (3) within the container body (2) and with an outlet (15) that is connected to the storage area (3) via an extraction conduit (13) for extracting the liquid (4) from the storage area (3) through the extraction conduit (13) and out of the outlet (15), whereby the extraction conduit (13) comprises a riser pipe (14) with an output end (18) located above a maximum filling level of the liquid (4) within the storage area (3) and connected to the outlet (15), whereby the filtration device (1) further comprises a filter element (10) that is arranged inside the container body (2) such that the liquid (4) that is extracted from the container body (2) must pass the filter element (10) before flowing out of the outlet (15),
wherein the container body (2) comprises a seating (11) for removably mounting the filter element (10) to the container body (2), and
wherein the storage area (3), the riser pipe (14) and the outlet (15) are integral parts of the one-piece container body (2), **characterised in that**
an input end (17) of the riser pipe (14) is connected to an output opening of the storage area (3) located at a bottom part of the container body (2), and **in that**
the filtration device further comprises a pressure generating device (7) for generating pressure within the container body (2) causing the liquid (4) to pass out of the container body (2) by flowing from the storage area (3) through the extraction conduit (13) and out of the outlet (15).

2. The filtration device (1) according to claim 1, **characterized in that** the inlet (5) of the container body (2) is arranged above the filling level of the storage area (3) and has a cross-sectional area which corresponds to the cross-sectional area of the storage area (3), so that the storage area (3) is accessible without undercuts via the inlet.

3. The filtration device (1) according to claim 1 or claim 2, **characterized in that** the seating (11) for the filter element (10) is only accessible from the storage area (3).

4. The filtration device according to claim 3,
wherein the seating (11) for the filter element (10) is located at a bottom of the storage area (3).

5. The filtration device according to claim 3 or 4,
wherein the seating (11) for the filter element (10) is designed and arranged in a manner as to allow for mounting of the filter element (10) in a position that fully covers the output opening of the storage area (3), so that
the flow path of liquid that is extracted from the storage area (3) must traverse the filter element (10) before entering the extraction conduit (13) within the riser pipe (14).

6. The filtration device (1) according to claim 1 or claim 2, **characterized in that** the seating (11) for the filter element (10) is accessible from outside of the container body (2) via a filter opening (22) in the container body (2), whereby the filter opening (22) is sealed liquid-tight with a removable filter opening lid (24), allowing the mounting or removal of the filter element (10) through the filter opening (22).

7. The filtration device (1) according to claim 6, **characterized in that** the filter element (10) is mounted to the filter opening lid (24).

8. The filtration device according to claim 5 or 6,
wherein the filter opening (22) is located close to the output opening of the storage area (3) and thus close to the input end (17) of the riser pipe (14).

9. The filtration device (1) according to one of the preceding claims, **characterized in that** the output end (18) of the riser pipe (14) is connected via a duct (19) to the laterally spaced outlet (15), whereby the duct (19) is a gutter open at the top.

10. The filtration device (1) according to claim 9, **characterized in that** the outlet (15) comprises a downward pointing spout (20).

11. The filtration device (1) according to one of the preceding claims, **characterized in that** the container body (2) is made of a dishwasher suitable material.

12. The filtration device (1) according to one of the preceding claims, **characterized in that** the filtration device (1) comprises a base part (28) to accommodate the container body (2), whereby the pressure generating device (7) is arranged inside of the base part (28) and pressure-transmitting connected to the storage area (3) if the container body (2) is accommodated on the base part (28).

13. The filtration device (1) according to claim 12, **characterized in that** the pressure generating device (7) is separated by a check valve (9) from the storage area (3) inside the container body (2).

## Patentansprüche

1. Filtervorrichtung (1) für Flüssigkeiten, die einen Behälterkörper (2) mit einem Vorratsbereich (3) zum Aufnehmen der Flüssigkeit (4), die von der Filtervorrichtung (1) gefiltert werden soll, umfasst, wobei der Behälterkörper (2) einen Einlass (5) zum Einfüllen der Flüssigkeit (4) in den Vorratsbereich (3) innerhalb des Behälterkörpers (2) und einen Auslass (15), der über eine Extraktionsleitung (13) mit dem Vorratsbereich (3) verbunden ist, um die Flüssigkeit (4) aus dem Vorratsbereich (3) durch die Extraktionsleitung (13) und aus dem Auslass (15) zu extrahieren, umfasst, wobei die Extraktionsleitung (13) ein Steigrohr (14) mit einem Ausgangsende (18) umfasst, das sich oberhalb eines maximalen Füllstands der Flüssigkeit (4) innerhalb des Vorratsbereichs (3) befindet und mit dem Auslass (15) verbunden ist, wobei die Filtervorrichtung (1) weiter ein Filterelement (10) umfasst, das innerhalb des Behälterkörpers (2) derart eingerichtet ist, dass die Flüssigkeit (4), die aus dem Behälterkörper (2) extrahiert wird, das Filterelement (10) passieren muss, bevor sie aus dem Auslass (15) ausströmt,
wobei der Behälterkörper (2) einen Sitz (11) zum abnehmbaren Montieren des Filterelements (10) an dem Behälterkörper (2) umfasst, und
wobei der Vorratsbereich (3), das Steigrohr (14) und der Auslass (15) integrale Teile des einstückigen Behälterkörpers (2) sind, **dadurch gekennzeichnet, dass**
ein Eingangsende (17) des Steigrohrs (14) mit einer Ausgangsöffnung des Vorratsbereichs (3) verbunden ist, die sich an einem Bodenteil des Behälterkörpers (2) befindet, und dass
die Filtervorrichtung weiter eine Druckerzeugungsvorrichtung (7) zum Erzeugen von Druck innerhalb des Behälterkörpers (2) umfasst, der die Flüssigkeit (4) veranlasst, aus dem Behälterkörper (2) auszutreten, indem sie aus dem Vorratsbereich (3) durch die Extraktionsleitung (13) und aus dem Auslass (15) strömt.

2. Filtervorrichtung (1) nach Anspruch 1, **dadurch gekennzeichnet, dass** der Einlass (5) des Behälterkörpers (2) oberhalb des Füllstands des Vorratsraums (3) eingerichtet ist und eine Querschnittsfläche aufweist, die der Querschnittsfläche des Vorratsbereichs (3) entspricht, so dass der Vorratsbereich (3) ohne Hinterschneidungen über den Einlass zugänglich ist.

3. Filtervorrichtung (1) nach Anspruch 1 oder Anspruch 2, **dadurch gekennzeichnet, dass** der Sitz (11) für das Filterelement (10) nur von dem Vorratsbereich (3) aus zugänglich ist.

4. Filtervorrichtung nach Anspruch 3,
wobei sich der Sitz (11) für das Filterelement (10) an einem Boden des Vorratsbereichs (3) befindet.

5. Filtervorrichtung nach Anspruch 3 oder 4,
wobei der Sitz (11) für das Filterelement (10) derart ausgelegt und eingerichtet ist, dass das Montieren des Filterelements (10) in einer Position erlaubt wird, die die Ausgangsöffnung des Vorratsbereichs (3) vollständig abdeckt, so dass
der Strömungspfad von Flüssigkeit, die aus dem Vorratsbereich (3) extrahiert wird, das Filterelement (10) durchqueren muss, bevor er in die Extraktionsleitung (13) innerhalb des Steigrohrs (14) eintritt.

6. Filtervorrichtung (1) nach Anspruch 1 oder Anspruch 2, **dadurch gekennzeichnet, dass** der Sitz (11) für das Filterelement (10) von außerhalb des Behälterkörpers (2) über eine Filteröffnung (22) in dem Behälterkörper (2) zugänglich ist, wodurch die Filteröffnung (22) mit einem abnehmbaren Filteröffnungsdeckel (24) flüssigkeitsdicht abgedichtet ist, der das Montieren oder Entfernen des Filterelements (10) durch die Filteröffnung (22) erlaubt.

7. Filtervorrichtung (1) nach Anspruch 6, **dadurch gekennzeichnet, dass** das Filterelement (10) an dem Filteröffnungsdeckel (24) montiert ist.

8. Filtervorrichtung nach Anspruch 5 oder 6,
wobei sich die Filteröffnung (22) nahe der Ausgangsöffnung des Vorratbereichs (3) und daher nahe dem Eingangsende (17) des Steigrohrs (14) befindet.

9. Filtervorrichtung (1) nach einem der vorstehenden Ansprüche, **dadurch gekennzeichnet, dass** das Ausgangsende (18) des Steigrohrs (14) über eine Leitung (19) mit dem seitlich angeordneten Auslass (15) verbunden ist, wobei die Leitung (19) eine nach oben offene Rinne ist.

10. Filtervorrichtung (1) nach Anspruch 9, **dadurch gekennzeichnet, dass** der Auslass (15) einen nach unten gerichteten Ausguss (20) aufweist.

11. Filtervorrichtung (1) nach einem der vorstehenden Ansprüche, **dadurch gekennzeichnet, dass** der Behälterkörper (2) aus einem spülmaschinengeeigneten Material hergestellt ist.

12. Filtervorrichtung (1) nach einem der vorstehenden Ansprüche, **dadurch gekennzeichnet, dass** die Filtervorrichtung (1) ein Basisteil (28) zum Aufnehmen des Behälterkörpers (2) aufweist, wobei die Druckerzeugungsvorrichtung (7) innerhalb des Basisteils (28) eingerichtet ist und druckübertragend mit dem Vorratsbereich (3) verbunden ist, falls der Behälterkörper (2) auf dem Basisteil (28) aufgenommen ist.

13. Filtervorrichtung (1) nach Anspruch 12, **dadurch gekennzeichnet, dass** die Druckerzeugungseinrichtung (7) durch ein Rückschlagventil (9) von dem Vorratsbereich (3) innerhalb des Behälterkörpers (2) getrennt ist.

## Revendications

1. Dispositif de filtration (1) pour liquides, comprenant un corps de récipient (2) avec une zone de stockage (3) pour contenir le liquide (4) destiné à être filtré par le dispositif de filtration (1), moyennant quoi le corps de récipient (2) comprend une entrée (5) pour effectuer le remplissage avec le liquide (4) dans la zone de stockage (3) à l'intérieur du corps de récipient (2) et une sortie (15) qui est reliée à la zone de stockage (3) par l'intermédiaire d'un conduit d'extraction (13) pour extraire le liquide (4) de la zone de stockage (3) par le biais du conduit d'extraction (13) et hors de la sortie (15), moyennant quoi le conduit d'extraction (13) comprend un tuyau montant (14) avec une extrémité de sortie (18) située au-dessus d'un niveau de remplissage maximum du liquide (4) à l'intérieur de la zone de stockage (3) et reliée à la sortie (15), moyennant quoi le dispositif de filtration (1) comprend en outre un élément filtre (10) qui est agencé à l'intérieur du corps du récipient (2), de telle sorte que le liquide (4) qui est extrait du corps de récipient (2) doive traverser l'élément filtre (10) avant de s'écouler hors de la sortie (15),
dans lequel le corps de récipient (2) comprend un siège (11) pour monter de manière amovible l'élément filtre (10) sur le corps de récipient (2), et
dans lequel la zone de stockage (3), le tuyau montant (14) et la sortie (15) font partie intégrante du corps de récipient monobloc (2), **caractérisé en ce que**
une extrémité d'entrée (17) du tuyau montant (14) est reliée à une ouverture de sortie de la zone de stockage (3) située au niveau d'une partie inférieure du corps de conteneur (2), et **en ce que**
le dispositif de filtration comprend en outre un dispositif de génération de pression (7) pour générer une pression à l'intérieur du corps de récipient (2) amenant le liquide (4) à sortir du corps de récipient (2) en s'écoulant depuis la zone de stockage (3) à travers le conduit d'extraction (13) et hors de la sortie (15).

2. Dispositif de filtration (1) selon la revendication 1, **caractérisé en ce que** l'entrée (5) du corps de récipient (2) est agencée au-dessus du niveau de remplissage de la zone de stockage (3) et présente une superficie de section transversale qui correspond à la superficie de section transversale de la zone de stockage (3) pour que la zone de stockage (3) soit accessible sans dégagement par l'intermédiaire de l'entrée.

3. Dispositif de filtration (1) selon la revendication 1 ou la revendication 2, **caractérisé en ce que** le siège (11) pour l'élément filtre (10) n'est accessible que depuis la zone de stockage (3).

4. Dispositif de filtration selon la revendication 3,
dans lequel le siège (11) pour l'élément filtre (10) est situé au fond de la zone de stockage (3).

5. Dispositif de filtration selon la revendication 3 ou 4,
dans lequel le siège (11) pour l'élément filtre (10) est conçu et agencé de manière à permettre le montage de l'élément filtre (10) dans une position qui recouvre entièrement l'ouverture de sortie de la zone de stockage (3) pour que
le trajet d'écoulement du liquide qui est extrait de la zone de stockage (3) doive traverser l'élément filtre (10) avant d'entrer dans le conduit d'extraction (13) à l'intérieur du tuyau montant (14).

6. Dispositif de filtration (1) selon la revendication 1 ou la revendication 2, **caractérisé en ce que** le siège (11) pour l'élément filtre (10) est accessible depuis l'extérieur du corps du récipient (2) par l'intermédiaire d'une ouverture de filtre (22) dans le corps de récipient (2), moyennant quoi l'ouverture du filtre (22) est fermée de manière étanche aux liquides avec un couvercle d'ouverture de filtre amovible (24) permettant le montage ou l'enlèvement de l'élément filtre (10) à travers l'ouverture du filtre (22).

7. Dispositif de filtration (1) selon la revendication 6, **caractérisé en ce que** l'élément filtre (10) est monté sur le couvercle d'ouverture de filtre (24).

8. Dispositif de filtration selon la revendication 5 ou 6,
dans lequel l'ouverture de filtre (22) est située près de l'ouverture de sortie de la zone de stockage (3) et donc près de l'extrémité d'entrée (17) du tuyau montant (14).

9. Dispositif de filtration (1) selon l'une des revendications précédentes, **caractérisé en ce que** l'extrémité de sortie (18) du tuyau montant (14) est reliée par l'intermédiaire d'une conduite (19) à la sortie latéralement espacée (15), moyennant quoi la conduite (19) est une gouttière ouverte en haut.

10. Dispositif de filtration (1) selon la revendication 9, **caractérisé en ce que** la sortie (15) comprend un bec verseur (20) orienté vers le bas.

11. Dispositif de filtration (1) selon l'une des revendications précédentes, **caractérisé en ce que** le corps de récipient (2) est fait d'un matériau approprié pour lave-vaisselle.

12. Dispositif de filtration (1) selon l'une des revendications précédentes, **caractérisé en ce que** le dispositif de filtration (1) comprend une partie de base (28) pour loger le corps de récipient (2), moyennant quoi le dispositif de génération de pression (7) est agencé à l'intérieur de la partie de base (28) et relié de manière transmettant la pression à la zone de stockage (3) si le corps de récipient (2) est logé sur la partie de base (28).

13. Dispositif de filtration (1) selon la revendication 12, **caractérisé en ce que** le dispositif de génération de pression (7) est séparé par un clapet anti-retour (9) de la zone de stockage (3) à l'intérieur du corps de récipient (2).
